# EUROPEAN PATENT APPLICATION

(11) **EP 4 044 273 A1**
(43) Date of publication of application: **17.08.2022**
(21) Application number: 20883817.7
(22) Date of filing: 05.11.2020
(51) Int. Cl.: H01M 4/06, H01M 10/48, H01M 50/20, H01M 6/16

(54) **LITHIUM PRIMARY BATTERY PACK AND GAS METER**

(30) Priority: 05.11.2019 JP 2019200736
(71) Applicant: Maxell, Ltd., Kyoto 618-8525 (JP)
(72) Inventor: KAWABE, Keisuke, Otokuni-gun, Kyoto 618-8525 (JP); WATARI, Soichi, Otokuni-gun, Kyoto 618-8525 (JP); KUDO, Takao, Otokuni-gun, Kyoto 618-8525 (JP)
(74) Representative: Stöckeler, Ferdinand
(86) International application number: PCT/JP2020/041332
(87) International publication number: WO 2021/090874

(57) **Abstract**

A lithium primary battery pack 100 includes: a primary battery body 1 including a cathode, an anode, and a separator; a voltage converter 22 that boosts the voltage from the primary battery body 1 to 3.4-3.8 V and outputs the boosted voltage; a detector 23 that detects a decrease in the voltage of the primary battery body 1; a cathode terminal T1 and an anode terminal T2 coupled to the voltage converter 22; and a signal terminal T3 coupled to the detector 23.

## Description

### TECHNICAL FIELD

The present invention relates to a lithium primary battery pack and a gas meter that uses such a battery pack as a power source.

### BACKGROUND ART

A gas meter measures flow rates of fuel gases (such as town gas, LP gas or the like) used at homes, stores and other facilities. A gas meter is installed at each facility such as a home or store. Fees are calculated based on the gas flow rate measured by the gas meter. Multi-function gas meters incorporating a microcomputer have gained popularity in recent years. For example, gas meters have been developed that can detect an abnormality, such as an abnormality in pressure, a gas leak, an earthquake, or a decrease in the voltage of the battery incorporated in the gas meter, and/or display the occurrence of an abnormality or notify an external management company of an abnormality via a communication means.

For example, JP 2004-144642 A (Patent Document 1) discloses a gas meter that automatically determines that the use environment temperature is outside the appropriate temperature range when this is the case and, based on this determination, automatically outputs an alarm or, in addition, interrupts the gas flow and terminates flow-rate measurement. Such a gas meter including a microcomputer uses a long-life battery, such as a lithium primary battery, as its power source. Particularly, in Europe, a thionyl chloride/lithium primary battery capable of discharging at a voltage not lower than 3.3 V (with a nominal voltage of 3.6 V) is used as a power source to address the operating voltage of the associated electronic device such as microcomputer.

### PRIOR ART DOCUMENTS

### PATENT DOCUMENTS

Patent Document 1: JP 2004-144642 A

### SUMMARY OF THE INVENTION

### PROBLEMS TO BE SOLVED BY THE INVENTION

The inventors examined lithium primary battery packs with an output voltage of 3.6 V, which can be substituted for thionyl-chloride lithium primary batteries to serve as a long-life primary battery usable as the power source for a gas meter, for example. If the lithium primary battery itself is to provide a voltage not lower than 3.3 V, the material for the cathode active material (or cathode activation agent) is necessarily essentially limited to thionyl chloride (SCOl₂). A limitation of the material for the cathode active material may limit material-derived properties of the battery, as well.

A thionyl chloride/lithium primary battery using thionyl chloride as its cathode active material, e.g., of the size ER18/50 (i.e., a diameter of 18 mm and a height of 52.6 mm), is suitable for discharging at low currents up to about 1 mA; however, such a battery may be difficult to provide pulse discharge or discharge at current values of several mA or higher. Further, a thionyl chloride/lithium primary battery, which only exhibits small changes in its internal resistance during discharge, has a discharge characteristic that the voltage does not decrease until toward the end of discharge and, directly before the end of discharge, dramatically drops. This means a short period of time from detection of a decrease in the voltage of the battery until the end of discharge. As a result, even if a decrease in voltage is detected and a notification is sent to the management company, it may be difficult to replace the battery while the battery is still operating.

In view of this, the present application discloses a lithium primary battery pack with an output voltage of approximately 3.6 V, where the freedom in choosing a material for the cathode active material is high and an end of discharge can be easily be detected in advance.

### MEANS FOR SOLVING THE PROBLEMS

A lithium primary battery pack according to an embodiment of the present invention includes: a lithium primary battery body including a cathode, an anode, and a separator located between the cathode and the anode; a voltage converter adapted to boost a voltage from the lithium primary battery body to 3.4-3.8 V and output the boosted voltage; a detector adapted to detect a decrease in the voltage of the lithium primary battery body; a cathode terminal and an anode terminal coupled to the voltage converter; and a signal terminal coupled to the detector. A gas meter according to another embodiment of the present invention includes the above-described lithium primary battery pack.

### EFFECTS OF THE INVENTION

The present disclosure provides a lithium primary battery pack with an output voltage of approximately 3.6 V, where the freedom in choosing a material for the cathode active material is high and an end of discharge can be easily be detected in advance.

### BRIEF DESCRIPTION OF THE DRAWINGS

[FIG. 1] FIG. 1 is a functional block diagram of an exemplary configuration of a lithium primary battery pack according to an embodiment.
[FIG. 2] FIG. 2 shows an exemplary configuration of the voltage converter of the lithium primary battery pack.
[FIG. 3] FIG. 3 shows an exemplary configuration of the detector of the lithium primary battery pack.
[FIG. 4] FIG. 4 shows an exemplary construction of the lithium primary battery pack 100 shown in FIG. 1 as viewed from outside.
[FIG. 5] FIG. 5 shows the internal construction, within the package 24, of the lithium primary battery pack 100 shown in FIG. 4.
[FIG. 6] FIG. 6 is a cross-sectional view of an exemplary construction of the lithium primary battery body 1.
[FIG. 7] FIG. 7 shows a transverse cross-sectional view of the lithium primary battery body 1 of FIG. 6.
[FIG. 8] FIG. 8 shows a variation of the separator.
[FIG. 9] FIG. 9 shows an example of a discharge characteristic of a lithium primary battery with a cathode active material of thionyl chloride.
[FIG. 10] FIG. 10 shows an example of a discharge characteristic of a lithium primary battery with a cathode active material of manganese dioxide.
[FIG. 11] FIG. 11 is a functional block diagram of an exemplary configuration of a gas meter.

### EMBODIMENTS FOR CARRYING OUT THE INVENTION

### (Arrangement 1)

A lithium primary battery pack according to an embodiment of the present invention includes: a lithium primary battery body including a cathode, an anode, and a separator located between the cathode and the anode; a voltage converter adapted to boost a voltage from the lithium primary battery body to 3.4-3.8 V and output the boosted voltage; a detector adapted to detect a decrease in the voltage of the lithium primary battery body; a cathode terminal and an anode terminal coupled to the voltage converter; and a signal terminal coupled to the detector.

In the above-described arrangement, the voltage converter boosts the voltage from the lithium primary battery body to 3.4-3.8 V, and outputs the boosted voltage to the cathode and anode terminals. This eliminates the necessity to limit the voltage of the lithium primary battery body to a high voltage of about 3.6 V That is, the lithium primary battery body may be a lithium primary battery with a voltage of about 3 V, for example. This increases the freedom in choosing a material for the cathode of the lithium primary battery body. Since a voltage boosted by the voltage converter is output to the cathode and anode terminals, it is sometimes difficult to detect a decrease in the voltage of the lithium primary battery body based on the voltage between the cathode and anode terminals. In the above-described arrangement, the battery pack includes a detector for detecting a decrease in the voltage of the lithium primary battery body and a signal terminal coupled to the detector. This enables detection of a decrease in the voltage of the lithium primary battery body via the signal terminal, without depending on the voltage between the cathode and anode terminals. This facilitates detection in advance of an end of discharge of the lithium primary battery pack. That is, the above-described arrangement makes it possible to provide a lithium primary battery pack with an output voltage of approximately 3.6 V, with a high freedom in choosing a material for the cathode active material and allowing easy detection in advance of an end of discharge.

The output voltage of the voltage converter is represented by the voltage between the cathode and anode terminals of the lithium primary battery pack. That is, the output voltage of the lithium primary battery pack is represented by the output voltage of the voltage converter. The nominal voltage of the lithium primary battery pack can be treated as the output voltage of the voltage converter. If the nominal voltage of the lithium primary battery pack is 3.4-3.8 V, the output voltage of the voltage converter can be treated as 3.4-3.8 V. If no nominal voltage is specified for the lithium primary battery pack, the voltage measured by a voltmeter between the cathode and anode terminals of a new primary battery pack can be treated as the output voltage of the voltage converter.

### (Arrangement 2)

Starting from Arrangement 1 described above, the lithium primary battery pack may further include a switch adapted to switch between connection and disconnection between the lithium primary battery body and the voltage converter. Switching by the switch switches on and off the power supply to the voltage converter from the lithium primary battery body.

### (Arrangement 3)

Starting from Arrangement 1 or 2 described above, the cathode may include, as cathode active material, manganese dioxide or a manganese oxide doped with lithium in advance. As the cathode active material is manganese dioxide or a manganese oxide doped with lithium in advance, a decrease in the voltage of the lithium primary battery body toward the end of discharge can be mitigated. Further, the discharge capacity of the lithium primary battery body is increased. This increases the period of time from detection of a decrease in the voltage of the primary battery body until the end of discharge. This further facilitates detection in advance of an end of discharge.

### (Arrangement 4)

Starting from any one of Arrangements 1 to 3 described above, the lithium primary battery pack may further include a package integrally containing the lithium primary battery body, the voltage converter and the detector, and the cathode terminal, the anode terminal and the signal terminal may be drawn out of the package. As a package is provided that integrally contains the lithium primary battery body, voltage converter and detector, the lithium primary battery body, voltage converter and detector are protected from adhesion of droplets, thereby increasing the reliability of the operation of the lithium primary battery pack.

### (Arrangement 5)

Starting from the lithium primary battery pack of any one of Arrangements 1 to 4 described above, the voltage of the lithium primary battery body may be lower than 3.4 V If a nominal voltage is specified for the lithium primary battery body, this nominal voltage is treated as the voltage of the lithium primary battery body. If no nominal voltage is specified for the lithium primary battery body, the voltage of a new lithium primary battery body is treated as the voltage of the lithium primary battery body.

A gas meter including the lithium primary battery pack of any one of Arrangements 1 to 5 described above is encompassed by the embodiments of the present invention. The gas meter is a gas meter using the lithium primary battery pack as its power source. The cathode of the lithium primary battery body of the lithium primary battery pack included in this gas meter may include, as the cathode active material, manganese dioxide or a manganese oxide doped with lithium in advance. Further, the gas meter may include a sensor adapted to detect a flow rate of gas and a controller adapted to control the gas meter. In such implementations, the lithium primary battery pack supplies the sensor and the controller with electric power.

The gas meter may include an output unit adapted to send, to an outside, information about a decrease in the voltage of the lithium primary battery body of any one of Arrangements 1 to 5 described above. For example, the gas meter may include, as the output unit, an output device adapted to output information to the outside by means of a sound, light, an image or a display machine, or a communication module adapted to perform data communication with the outside. In such implementations, the communication model sends to the outside information based on the signal output from the signal terminal of the primary battery pack. The primary battery pack supplies the output unit with electric power.

### [Embodiments]

Now, embodiments will be described with reference to the drawings. The same and corresponding components in the drawings are labeled with the same reference characters, and will not be described repeatedly. For ease of explanation, components in the drawings referred to below may be simplified or shown schematically, or some components may be omitted.

### (Exemplary Configuration of Battery)

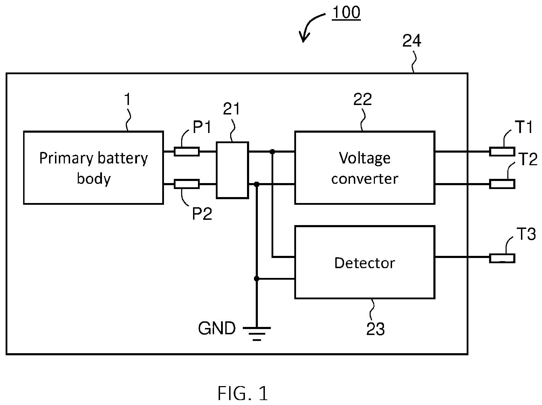

FIG. 1 is a functional block diagram of an exemplary configuration of a lithium primary battery pack of an embodiment. A lithium primary battery is a primary battery using lithium as its anode active material. The lithium primary battery pack 100 shown in FIG. 1 includes a lithium primary battery body 1 constituted by a lithium primary battery (hereinafter also referred to simply as primary battery body 1), a switch 21, a voltage converter 22, a detector 23, a package 24, a cathode terminal T1, an anode terminal T2, and a signal terminal T3. The primary battery body 1, switch 21, voltage converter 22 and detector 23 are contained in a single package 24. The cathode and anode terminals T1 and T2 are coupled to the voltage converter 22, while the signal terminal T3 is coupled to the detector 23. Further, the terminals are drawn out of the package 24. This results in an integral lithium primary battery pack 100 incorporating a voltage converter 22 and detector 23 and having a cathode terminal T1, anode terminal T2 and signal terminal T3 on its outside.

The primary battery body 1 includes a cathode, an anode, and a separator located between the cathode and anode. A specific example of the primary battery body 1 will be described further below. The primary battery body 1 has a cathode external terminal P1 and an anode external terminal P2, which are connected to the cathode and anode, respectively, of the primary battery body 1 and coupled to the voltage converter 22 and detector 23 via the switch 21. The switch 21 switches between connection and disconnection between the cathode and anode external terminals P1 and P2 of the primary battery body 1, on the one hand, and the voltage converter 22 and detector 23, on the other. When the switch is turned on, the voltage converter 22 is supplied with electric power from the primary battery body 1 such that the voltage converter 22 begins to operate. Further, when the switch is turned on, the detector 23 is supplied with the voltage from the primary battery body 1 such that the detector 23 outputs a signal that corresponds to this voltage.

The switch 21 may include, for example, a transistor (e.g., MOSTFT) coupled between the cathode external terminal P1 and the voltage converter 22 and detector 23. The switch 21 may be configured such that the switch 21 can be turned on and off by input of an electric signal from outside the package 24 or by a mechanical operation.

For example, when the lithium primary battery pack 100 is not used, the switch 21 may be turned off to disconnect the primary battery body 1 from the voltage converter 22 and detector 23. This will save electric power in the primary battery body 1. In some implementations, the switch 21 may be omitted. In such implementations, the cathode and anode external terminals P1 and P2 are directly coupled to the voltage converter 22, while the cathode and anode external terminals P1 and P2 are directly coupled to the detector 23.

The voltage converter 22 boosts an input voltage. The voltage converter 22 may be constituted by, for example, a DC/DC converter such as a switching regulator or linear regulator. In the implementation shown in FIG. 1, the voltage converter 22 has input terminals coupled to the cathode and anode external terminals P1 and P2 of the primary battery body 1, and output terminals coupled to the cathode and anode terminals T1 and T2. The voltage converter 22 converts the voltage from the primary battery body 1 (i.e., voltage between the cathode and anode external terminals P1 and P2) to 3.6 V, and outputs the resulting voltage to the cathode and anode terminals T1 and T2. In the present implementation, the anode external terminal P2 and anode terminal T2 are grounded, i.e., coupled to the ground (GND).

In the present embodiment, the output voltage of the voltage converter 22 is 3.6 V. This results in a lithium primary battery pack with approximately 3.6 V. For example, if the voltage of the primary battery body 1 is about 3V, the voltage converter 22 may be a boosting circuit that boosts the voltage from the primary battery body 1 to 3.6 V. If necessary, the output voltage of the voltage converter 22 may be set within the range of 3.4 V to 3.8 V. To replace a thionyl chloride/lithium primary battery, it is desirable that the output voltage be as close as possible to 3.6 V; the output voltage is desirably in the range of 3.45 to 3.75 V, more desirably in the range of 3.5 to 3.7 V, and yet more desirably in the range of 3.52 to 3.68 V

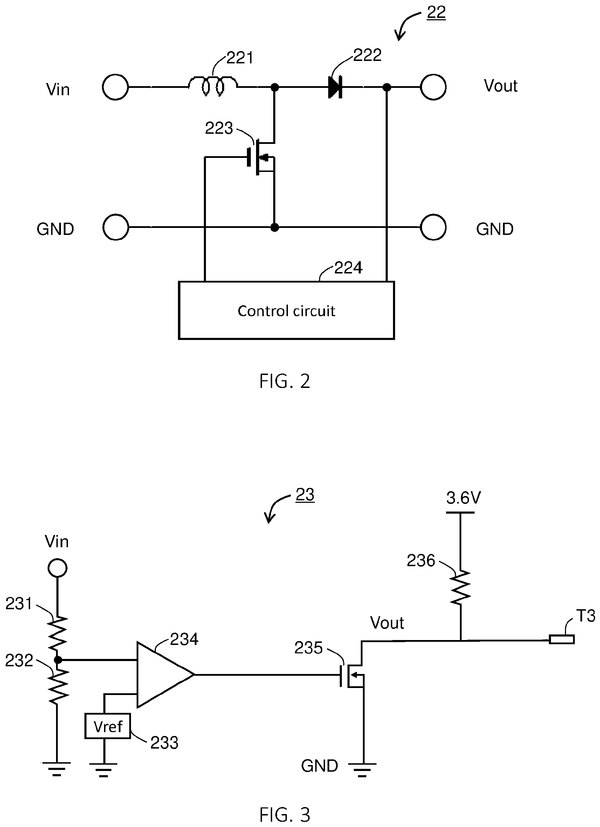

FIG. 2 shows an exemplary configuration of the voltage converter 22. The voltage converter 22 is not limited to the exemplary configuration shown in FIG. 2. In the implementation shown in FIG. 2, the voltage converter 22 includes an inductor 221, a diode 222, a switching element (i.e., MOS transistor) 223, and a control circuit 224. The input terminal Vin of the voltage converter 22 is coupled to the cathode external terminal P1 of the primary battery body 1, while the output terminal Vout is coupled to the cathode terminal T1 (see FIG. 1). Between the input and output terminals Vin and Vout are coupled the inductor 221 and diode 222, from the input side onward. The diode 222 is coupled in such a manner that the direction from the input to the output is represented by its forward direction. The drain of the MOS transistor 223 is coupled between the anode of the diode 222 and the inductor 221, while the source of the MOS transistor 223 is coupled to the ground. The control circuit 224 is coupled to the gate of the MOS transistor 223 and the cathode of the diode 222. Although not shown, a capacitor may be coupled between the output terminal Vout and ground. Further, a capacitor may be coupled between the cathode of the diode 222 and the control circuit 224.

The control circuit 224 operates the voltage converter 22 by repeatedly turning on and off the MOS transistor 223. The control circuit 224 may control turning on/off of the MOS transistor 223 such that the voltage at the terminal Vout is at a predetermined level. For example, the control circuit 224 may refer to the voltage at the terminal Vout to feedback-control the on/off ratio of the MOS transistor 223 such that the voltage at the terminal Vout has a pre-set value. Further, the control circuit 224 may control the transistor such that the voltage at the terminal Vout does not exceed a predetermined upper limit for the voltage of the lithium primary battery pack 100.

The configuration of the voltage converter 22 is not limited to a DC/DC converter including a coil and a switching element, as illustrated in FIG. 2. For example, the voltage converter 22 may be an insulating-type converter using a transformer (e.g., flyback-type DC/DC converter), or a charge pump using a capacitor.

The detector 23 detects a decrease in the voltage between the cathode and anode external terminals P1 and P2 of the primary battery body 1. The detector 23 has an input terminal coupled to the cathode external terminal P1 of the primary battery body 1, and an output terminal coupled to the signal terminal T3. In the implementation shown in FIG. 1, the anode external terminal P2 coupled to the detector 23 is grounded, i.e., coupled to the ground (GND). The detector 23 monitors the voltage of the primary battery body 1, i.e., the voltage between the cathode and anode external terminals P1 and P2, and outputs to the signal terminal T3 a signal that corresponds to that voltage. For example, if the voltage between the cathode and anode external terminals P1 and P2 is below a predetermined detection voltage, the detector 23 may output a signal to that effect to the signal terminal T3. For example, the detector 23 may be configured to change the level of the output signal (e.g., change a high level to a low level) when the voltage between the cathode and anode external terminals P1 and P2 is equal to a detection voltage. Alternatively, the detector 23 may output a signal that indicates the voltage between the cathode and anode external terminals P1 and P2.

The detection voltage may be, for example, a voltage that is not lower than 2.0 V and lower than the voltage of the primary battery body 1. The higher the detection voltage, the longer the period of time from detection of a decrease in the voltage of the primary battery body 1 until an end of discharge can be. In view of this, the detection voltage is preferably not lower than 2.3 V, and more preferably not lower than 2.5 V

FIG. 3 shows an exemplary configuration of the detector 23. The detector 23 is not limited to the exemplary configuration shown in FIG. 3. In the implementation shown in FIG. 3, the detector 23 includes voltage detection resistors 231 and 232, a comparator 234, a reference voltage supply 233, a switching element (i.e., MOS transistor) 235, and a pull-up resistor 236. The voltage detection resistors 231 and 232 are coupled in series between the input terminal Vin and ground. A node between the voltage detection resistors 231 and 232 is coupled to one input terminal of the comparator 234, while the output terminal of the reference voltage supply 233 is coupled to the other input terminal of the comparator 234. The output terminal of the comparator 234 is coupled to the gate of the MOS transistor 235. The drain of the MOS transistor 235 is coupled to the output terminal Vout, while the source is coupled to the ground. The pull-up resistor 236 is coupled between the output terminal Vout and the 3.6 V line (i.e., output line of the voltage converter 22).

At the detector 23, a voltage obtained by dividing the voltage at the input terminal Vin through the voltage detection resistors 231 and 232 is compared with the voltage at the reference voltage supply. The detection voltage is set by the resistance division ratio of the voltage detection resistors 231 and 232. That is, the resistance division ratio of the voltage detection resistors 231 and 232 is such that the voltage after the division through the voltage detection resistors 231 and 232 is equal to the voltage at the reference voltage supply when the voltage at the input terminal Vin is equal to the detection voltage. For example, when the voltage at the input terminal Vin is higher than the detection voltage, the output of the comparator 234 turns off the MOS transistor 235 and a pulled-up high-level signal is output to the output terminal Vout; when the voltage at the input terminal Vin is not higher than the detection voltage, the MOS transistor 235 is turned on, and a low-level signal is output to the output terminal Vout.

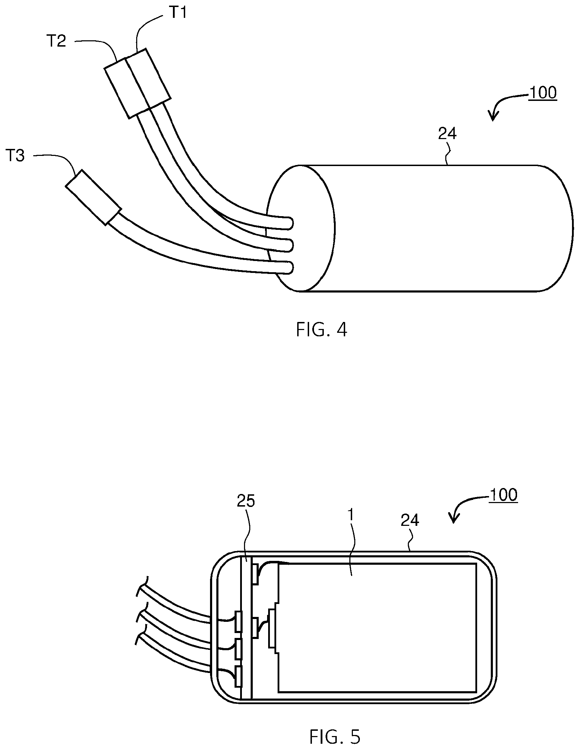

FIG. 4 shows an exemplary construction of the lithium primary battery pack 100 shown in FIG. 1 as viewed from outside. In the implementation shown in FIG. 4, a line for the cathode terminal T1, a line for the anode terminal T2, and a line for the signal terminal T3 are drawn out of the package 24. In the implementation shown in FIG. 4, the package 24 is cylindrical in shape. The cathode, anode and signal terminals T1, T2 and T3 are drawn out from one of the sides of the package 24 as determined along the longitudinal direction.

The package 24 is not limited to this shape. For example, the package 24 may have a button shape, a rectangular shape, or other shapes that comply with a standard for primary batteries. The package 24 may not necessarily tightly seal in the contents (i.e., primary battery body 1, switch 21, voltage converter 22 and detector 23). Alternatively, the contents may be tightly sealed in by the package 24 to increase the waterproof properties and dust resistance of the lithium primary battery pack 100.

The lines drawn out of the package 24 may be lead wires with an outer periphery covered with an insulator, or may be an exposed metal wire or a metal ribbon. In the implementation shown in FIG. 4, three lines, i.e., the cathode terminal T1, anode terminal T2 and signal terminal T3, are drawn out from one of the ends of the package 24 as determined along the longitudinal direction. The positions at which the lines are drawn out are not limited to these ones. For example, one or more of the three lines may be drawn out from one of the package ends along the longitudinal direction, while the other lines are drawn out from the other end. In other implementations, at least one of the three lines may be drawn out from the outer peripheral surface of the cylindrical package 24. In yet other implementations, at least one of the cathode, anode and signal terminals T1, T2 and T3 may be exposed to the outside of the package 24, without any intermediate line.

FIG. 5 shows the internal construction, within the package 24, of the lithium primary battery pack 100 shown in FIG. 4. In the implementation shown in FIG. 5, the package 24 contains the cylindrical primary battery body 1 and a board 25. The switch 21, voltage converter 22 and detector 23 shown in FIG. 1 are mounted on the board 25. Pads are provided on the board 25 to which the cathode external terminal P1, anode external terminal P2, cathode terminal T1, anode terminal T2, and signal terminal T3 of the primary battery body 1 are coupled.

In the implementation shown in FIG. 5, the primary battery body 1 and board 25 are arranged in the longitudinal direction of the package 24. The board 25 is positioned such that the mounting surface of the board 25 is perpendicular to the above-method longitudinal direction. The positionings of the primary battery body 1 and board 25 are not limited to these ones. For example, the board 25 may be positioned inside the package 24 such that the mounting surface of the board 25 is parallel of the longitudinal direction.

In some implementations, the package 24 may be omitted from the lithium primary battery pack 100. In such implementations, for example, the primary battery body 1 may be mounted on the board 25 such that the primary battery body 1 and board 25 are integral. In implementations where the package 24 is omitted, the volume of the lithium primary battery pack 100 will be decreased to provide a smaller pack.

Furthermore, the primary battery body 1 may be constituted by a plurality of batteries. For example, the primary battery body 1 may constituted by a battery set, with a plurality of primary batteries coupled in parallel.

### (Exemplary Construction of Primary Battery Body)

Now, the construction of the primary battery body 1 will be described in detail. The primary battery body 1 is not limited to any particular shape, and may be a battery of any of various shapes, such as cylindrical, rectangular, or sheet-shaped. For example, if the battery body is used as the battery for a gas meter, the primary battery body 1 is typically a cylindrical battery. The primary battery body 1 is a lithium primary battery containing lithium in the anode.

The primary battery body 1 includes an electrode assembly having a cathode including a cathode active material layer and an anode including an anode active material layer, which are together spirally rolled with a separator sandwiched in between (i.e., rolled electrode assembly). The cathode may be constructed such that, for example, one or each of the surfaces of a current collector is provided with a cathode active material layer. To provide an increased capacity for the battery, it is preferable to increase the thickness of the cathode (e.g., total thickness of the current collector and the cathode active material layer(s) on one or both surface(s) thereof). The thickness of the cathode is, for example, preferably not smaller than 1 mm, and more preferably not smaller than 1.4 mm. However, if the cathode has an excessively large thickness, for example, the cathode active material layer(s) may have portions thereon where discharge reaction does not proceed uniformly and that thus do not sufficiently contribute to discharge, which means that the increased capacity achieved by increasing the thickness of the cathode may be small. In view of this, the thickness of the cathode is preferably not larger than 2 mm, and more preferably not larger than 1.8 mm.

The separator may be made of a fine porous film or non-woven fabric made of resin, and such materials may be overlaid on top of each other to form a separator. A nonaqueous electrolyte used in the primary battery body 1 is a solution of an electrolyte salt dissolved in an organic solvent, and examples of such electrolyte salts include lithium salts such as LiClO₄, LiCF₃SO₃, LiC₂F₅SO₃, LiN(FSO₂)₂, LiN (CF₃SO₂)₂, LiPF₆ and LiBF₄.

Examples of organic solvents that can be used in the nonaqueous electrolyte include cyclic carbonates such as ethylene carbonate, propylene carbonate, butylene carbonate and vinylene carbonate; chain carbonates such as dimethyl carbonate, diethyl carbonate and methyl ethyl carbonate; ethers such as 1,2-dimethoxyethane (ethylene glycol dimethyl ether), diglyme (diethylene glycol dimethyl ether), triglyme (triethylene glycol dimethyl ether), tetraglyme (tetraethylene glycol dimethyl ether), methoxyethoxyethane, 1,2-diethoxyethane, tetrahydrofuran; cyclic esters such as γ-butyrolactone; nitrile; and the like, where only one of these may be used or two or more may be used in combination. In particular, it is preferable to use such a cyclic carbonate and such an ether in combination.

Preferred examples of cyclic carbonates include ethylene carbonate and propylene carbonate. The ether is preferably 1,2-dimethoxyethane.

If a cyclic carbonate and an ether are used in combination for the nonaqueous electrolyte solvent, to provide heat resistance, the proportion of the cyclic carbonate in the total of the cyclic carbonate and ether in the entire solvent, 100 volume %, is preferably not smaller than 20 volume %, and more preferably not smaller than 30 volume %. On the other hand, to provide discharge properties, the proportion of the ether in the total of the cyclic carbonate and ether in the entire solvent, 100 volume %, is preferably not smaller than 30 volume %, more preferably not smaller than 40 volume %, and most preferably not smaller than 50 volume %.

To provide good lithium-ion conductivity, the concentration of the lithium salt in the nonaqueous electrolyte is preferably not smaller than 0.3 mol/L, more preferably not smaller than 0.4 mol/L; the concentration is preferably not larger than 1.2 mol/L, and more preferably not larger than 1.0 mol/L. If a plurality of lithium salts are contained, it is preferable to adjust the total amount to such a range.

To improve the storage properties of the battery, an electrolyte additive such as vinylene carbonatee, or propane sultone, or LiB(C₂O₄)₂ may be contained. To provide good improvements in storage properties, the content of the electrolyte additive in the nonaqueous electrolyte is, for example, preferably not smaller than 0.1 mass %, more preferably not smaller than 0.3 mass %, and most preferably not smaller than 0.5 mass %. On the other hand, to prevent an increase in the internal resistance in the battery and the resulting decrease in discharge properties, the content of the electrolyte additive in the nonaqueous electrolyte is preferably not larger than 5 mass %, more preferably not larger than 3 mass %, and most preferably not larger than 2 mass %.

As discussed above, the cathode includes a cathode active material layer. For example, the cathode may be constructed such that one or each of the surfaces of the current collector is provided with a cathode active material layer. In addition to the cathode active material, the cathode active material layer may contain a conductive aid or binder, for example.

Examples of cathode active materials include, for example, manganese dioxide, carbon fluoride, ferric sulfide, a compound obtained by mixing such a material with lithium in advance, and a spinel lithium-manganese complex oxide; from the viewpoints of discharge capacity and operating voltage, manganese dioxide is preferable. To improve discharge properties, the cathode active material may be a lithium-manganese oxide (LiₓMnO₂) obtained by mixing (or doping) manganese dioxide with Li in advance. The lithium content in the lithium-manganese oxide is preferably one represented by a mol ratio to manganese, x, not larger than 1/15.

Examples of conductive aids include graphite, carbon black (Ketjenblack), acethylene black, and furnace black. Only one of them may be used as the conductive aid, or two of them may be used in combination. The binder may be a fluorine resin such as a polytetrafluoroethylene (PTFE) or polyvinylidene fluoride (PVDF); a rubber-based binder; or the like. If a fluorine resin such as PTFE or PVDF is used, it may be dispersion-type or powder-type; a dispersion type resin is particularly suitable.

In the cathode active material layer, for example, the content of the cathode active material is preferably 92 to 97 mass %, the content of the conductive aid is preferably 2 to 4 mass %, and the content of the binder is preferably 1 to 4 mass %.

The current collector used for the cathode may be, for example, a stainless steel such as SUS316, SUS430 or SUS444, or one using aluminum as its raw material. Exemplary forms of the current collector include plain-woven wire netting, expanded metal, steel netting, punching metal, and foil (or sheet).

A paste-like conductive material may be applied to the surface of the cathode current collector. If the cathode current collector is a net-shaped one having a three-dimensional structure, application of the conductive material achieves as significant improvements in the current-collection effect as in implementations where the cathode current collector is made of an essentially flat sheet such as metal foil or punching metal. This is presumably because of effective use of not only the routes provided by direct contacts between the metal portions of the net-shaped current collector and the cathode mixture layer, but also of the routes established by the conductive material filling the meshes.

The conductive material may be, for example, a silver paste or a carbon paste. Especially a carbon paste requires lower material costs than a silver paste and, in addition, provides substantially the same contact effect as a silver paste, which makes a carbon paste suitable for reducing manufacturing costs of cylindrical nonaqueous electrolyte primary batteries. The binder of the conductive material is preferably a heat-resistant material such as water glass or an imide-based binder. This is because the cathode mixture layer is dried at high temperatures above 200 °C when water is removed from the layer. The thickness of the cathode current collector is preferably 0.1 to 0.4 mm.

To increase the capacity of the battery, the density of the cathode active material layer is preferably not lower than 2.5 g/cm³, more preferably not lower than 2.6 g/cm³, and most preferably not lower than 2.7 g/cm³. On the other hand, to adjust the amount of absorption of the nonaqueous electrolyte and to prevent a decrease in discharge properties, the density of the cathode active material layer is preferably not higher than 3.2 g/cm³, more preferably not higher than 3.1 g/cm³, and most preferably not higher than 3.0 g/cm3.

The cathode may be manufactured by, for example, mixing a cathode active material with a conductive aid or binder and adding water or the like as necessary to produce a cathode mixture (i.e., slurry), rolling the cathode mixture with a roller or the like to produce a preliminary sheet, drying and pulverizing the sheet and rolling it once again, for example, to a sheet shape to produce a cathode mixture sheet, overlaying it on one or each of the surfaces of a current collector, and pressing them all such that the cathode mixture sheet and current collector become integral, thereby forming a layer of cathode mixture sheet (i.e., cathode active material layer) on one or each of the surfaces of a current collector.

Specifically, for example, a current collector and two cathode mixture sheets may be overlaid on top of each other such that the edges of the current collector are located inward of the associated edges of the cathode mixture sheets by several mm, and then pressing portions of the sheet assembly 3 to 10 mm distant from that one of its ends along the longitudinal direction at which rolling initiates, thereby producing a cathode whose current collector has cathode active material layers on its both surfaces and some of them are fixed to the current collector.

If the cathode has a small thickness (for example, not larger than 0.7 mm), an electrode with good flexibility can be obtained even if the entire area of one surface of the cathode active material layer is integral with the current collector, thus posing no problems when it is spirally rolled together with the anode and separator to fabricate a rolled electrode assembly. If the thickness of the cathode is large, e.g., not smaller than 1 mm, this results in decreased flexibility and pliability, and thus stresses applied to the cathode are more likely to lead to cracks or missing portions in the active material layers. Thus, as discussed above, it is preferable that only part of the cathode active material layer is fixed to the current collector and portions of the cathode active material layer that are not fixed to the current collector are displaced from the current collector during rolling to mitigates stress applied to the cathode.

From the working viewpoint, it is preferable that the cathode mixture sheet and cathode current collector are made integral prior to fabrication of the rolled electrode assembly. Alternatively, a separate cathode mixture sheet and a separate cathode current collector may be made integral during the rolling that produces the rolled electrode assembly. This manufacturing method does not present particular problems in terms of properties.

The cathode is not limited to one manufactured by the above-described method, and may be manufactured by other methods. For example, the cathode may be manufactured by applying cathode mixture slurry to one or each of the surfaces of the current collector and drying it, and then performing pressing as necessary, thereby forming a cathode active material layer on a current collector.

The resin fine porous film or non-woven fabric may be a porous film or non-woven fabric commonly used for separators in lithium primary batteries. Examples of resins forming the fine porous film or non-woven fabric include: polyolefins such as polyethylene (PE) and polypropylene (PP); polyesters such as polyethylene terephthalate (PET) and polybutylene terephthalate (PBT); and polyphenylene sulfide (PPS), where one or more of them may be used.

As discussed above, the anode of the primary battery body 1 includes an anode active material layer. The anode may be, for example, constructed such that one or each of the surfaces of the current collector is provided with an anode active material layer. The anode active material layer may be composed of, for example, a lithium sheet (i.e., lithium foil or lithium alloy foil). If the anode active material layer is made of a lithium alloy foil, the lithium alloy may be a lithium-aluminum alloy, for example. Particularly, it is preferable that the anode active material layer is a laminated body obtained by bonding together a lithium foil and a thin aluminum foil (or a pair of thin aluminum foils), where the thin aluminum foil (or one of the thin aluminum foils) is positioned to be adjacent to the cathode active material layer. The laminated body of a lithium foil and thin aluminum foil contacts the above-discussed nonaqueous electrolyte within the battery to produce a lithium-aluminum alloy at their interface. Thus, the use of a laminated body of a lithium foil and a thin aluminum foil allows production of a lithium-aluminum alloy within the battery, on the surface of the lithium sheet forming the anode active material layer. At this time, the lithium-aluminum alloy becomes fine powder, thus increasing its specific surface area on the alloy-containing surface of the lithium sheet. Thus, as this alloy-containing surface faces the cathode active material layer, the battery will discharge more efficiently.

In the case of a battery with a cathode of a manganese oxide, such as manganese dioxide, during storage at high temperatures, manganese can easily be eluted from the cathode into the electrolyte such that eluted manganese may precipitate on the surface of lithium of the anode and thus increase the internal resistance in the battery; however, forming a lithium-aluminum alloy on the surface of lithium will prevent precipitation of manganese on the surface of the anode, thereby preventing an increase of the internal resistance in the battery more effectively.

The thickness of the lithium sheet forming the anode active material layer is preferably 0.1 to 1 mm. If a laminated body of a lithium foil and a thin aluminum foil, discussed above, is used, it is preferable that the thickness of the lithium foil is 0.1 to 1 mm and the thickness of the thin aluminum foil is 0.005 to 0.05 mm.

The anode current collector may be a foil of copper, nickel, iron, stainless steel, or the like. Since the internal volume of the battery container (i.e., exterior can) is reduced by the thickness of the anode current collector, it is preferable to minimize the thickness of the anode current collector; specifically, it is recommended that the thickness is not larger than 0.1 mm, for example. That is, if the thickness of the anode current collector is excessively large, this necessitates reduction of the length of lithium sheet forming the anode active material layer, which may decrease improvements in battery capacity derived from the increased cathode thickness. On the other hand, if the thickness of the anode current collector is excessively small, it can easily tear; in view of this, the thickness of the anode current collector is preferably not smaller than 0.005 mm. Further, it is preferable to adjust the width and length of the anode current collector so as to contact the entire area of one of the surfaces of the lithium sheet forming the anode active material layer. The surface area of the anode current collector is preferably 100 to 130 % of the surface area of the lithium sheet. As the entire area of one of the surfaces of the lithium sheet is in contact with the anode current collector, this will prevent a break of portions of the lithium sheet that are not in contact with the anode current collector and the resulting electrical disconnection.

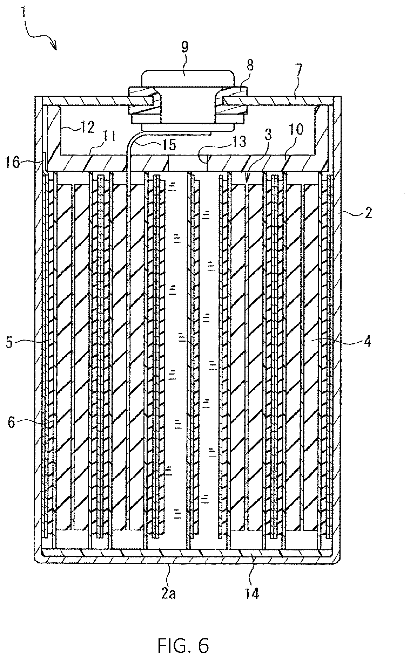

FIG. 6 is a cross-sectional view of an exemplary construction of the primary battery body 1. In the implementation shown in FIG. 6, the primary battery body 1 includes an exterior can 2, a rolled electrode assembly 3, a nonaqueous electrolyte, and a sealing structure that seals the opening of the exterior can 2 at its top. The exterior can 2 is made of iron, stainless steel or the like, and has the shape of a bottomed cylinder with an opening at its top. The rolled electrode assembly 3 is obtained by spirally rolling the cathode 4 and anode 5 loaded in the exterior can 2, with a separator 6 provided in between. In other words, the primary battery body 1 shown in FIG. 1 has power generating elements such as a rolled electrode assembly 3 with a spirally rolled cathode 4 and anode 5 with a separator 6 provided in between, and nonaqueous electrolyte, located within a space surrounded by the exterior can 2 and the sealing structure that seals the opening of the exterior can 2 at its top.

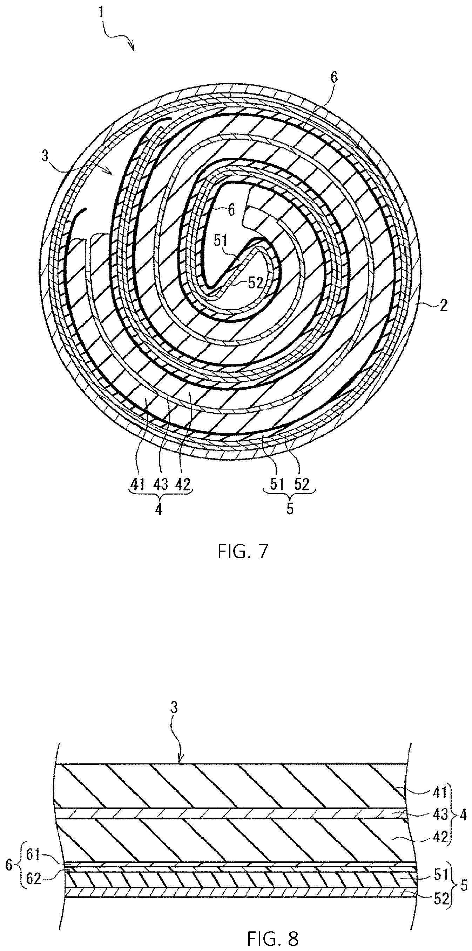

FIG. 7 shows a transverse cross-sectional view of the primary battery body 1 of FIG. 6. As shown in FIG. 7, the rolled electrode assembly 3 is obtained by rolling a long cathode 4 and a long anode 5 with a separator 6 placed therebetween, and, as a whole, generally has the shape of a circular column. In the primary battery body 1 shown in FIG. 7, the cathode 4 is constructed such that two cathode mixture sheets 41 and 42 are overlaid upon each other, with a current collector 43 placed therebetween. The anode 5 is constructed such that an anode active material layer 51 and a current collector 52 are overlaid upon each other. In the rolled electrode assembly 3, one long anode 5 is rolled with a folding at its middle of rolling, as shown in FIG. 7. Thus, in the cross section shown in FIG. 7, the anode 5 halves are in contact with each other at its current-collector side, and the anode active material layer of each half of the anode 5 faces the cathode 4, with the separator 6 placed therebetween.

It will be understood that the separator 6 may be formed by overlaying a plurality of fine porous films of resin or/and non-woven fabric sheets of resin. This will further ensure that an internal short circuit in the battery is prevented. For example, as shown in FIG. 8, two or more fine porous films of resin (in FIG. 8, two fine porous films of resin 61 and 62) are overlaid upon each other without being bonded together, and placed between the cathode 4 and anode 5. Further, in the rolled electrode assembly 3 shown in FIG. 8, the cathode 4 includes cathode active material layers 41 and 42 on both surfaces of the cathode current collector 43, while the anode 5 includes an anode active material layer 51 on one of the surfaces of the anode current collector 52.

In the implementation shown in FIG. 6, the sealing structure of the primary battery body 1 includes a cap plate 7, a terminal body 9, and an insulating plate 10. The cap plate 7 is fixed to the inner circumference of the edge of the exterior can 2, at the opening at the top of the can. The terminal body 9 is mounted over an opening in the cap plate 7 at its middle by means of an insulating packing 8 made of polypropylene, for example. The insulating plate 10 is located below the cap plate 7. The insulating plate 10 has the shape of a round saucer that is open upward, with an annular side wall 12 standing on the peripheral edge of a disk-shaped base 11. A gas channel 13 is provided in the middle of the base 11. The cap plate 7 may be received by the top end of the side wall 12 and, with this state kept, fixed to the inner circumference of the edge of the exterior can 2 at the opening at the top by laser welding, or fixed by a crimp seal with a packing placed in between. To address a rapid increase in the internal pressure in the battery, a thin-wall portion (i.e., vent) may be provided in the cap plate 7 or the bottom 2a of the exterior can 2. The cathode 4 and the lower surface of the terminal body 9 are coupled to each other by a cathode lead 15. Further, an anode lead 16 attached to the anode 5 is welded to the inner surface of an upper portion of the exterior can 2. Further, an insulating sheet 14 of resin is placed on the bottom 2a of the exterior can 2.

In the implementation shown in FIG. 6, the terminal body 9 is electrically coupled to the cathode 4. The exterior can 2 is electrically coupled to the anode 5. Within the package 24, the terminal body 9 is electrically coupled to the pad for the cathode on the board 25, while the exterior can 2 is coupled to the pad for the anode on the board 25. It will be understood that the primary battery body described with reference to FIGS. 6 to 8 is merely an example, and a primary battery body that can be used in conjunction with the present invention is not limited to this example.

In the lithium primary battery pack 100 of the present embodiment, the voltage between the cathode 4 and anode 5 of the lithium primary battery body 1 is boosted to 3.6 V by the voltage converter 22 and output to the cathode and anode terminals T1 and T2 outside the package 24. Further, a decrease in the voltage of the primary battery body 1 is detected by the detector 23 and output in the form of a signal to the signal terminal T3 outside the package 24. In this arrangement, it is not necessary that the voltage of the primary battery body 1 be 3.6 V Thus, as discussed above, the range of choices of materials for the cathode active material of the cathode 4 will be extended. Conventionally, to obtain an output voltage of 3.6 V with a lithium primary battery, the material that can be used for the cathode active material is limited to thionyl chloride, for example. In the present embodiment, the voltage converter 22 is incorporated in the lithium primary battery pack 100, which will allow the primary battery body 1 to be, for example, a lithium primary battery with a voltage lower than 3.4 V, e.g., with a voltage in a range of 2.7 V to 3.3 V. Thus, the material for the cathode active material of the primary battery body is not limited to thionyl chloride, for example, which will increase the freedom in choosing a material. The higher the voltage of the primary battery body 1, the better; the voltage is preferably not lower than 2.8 V, and more preferably not lower than 2.9 V

Since voltages that have been converted by the voltage converter 22 are output to the cathode and anode terminals T1 and T2 of the lithium primary battery pack 100, it is difficult to detect a decrease in the voltage of the primary battery body 1 based on the voltage between the cathode and anode terminals T1 and T2 at an early stage. However, the lithium primary battery pack 100 incorporates the detector 23 that detects a decrease in the voltage of the primary battery body 1, and the signal terminal T3 coupled to the detector 23 is drawn out of the package 24. A signal indicating a decrease in the voltage of the primary battery body 1 is output at the signal terminal T3. This facilitates early detection of a decrease in the voltage of the primary battery body 1. This will facilitate detecting an end of discharge of the lithium primary battery body 100 in advance.

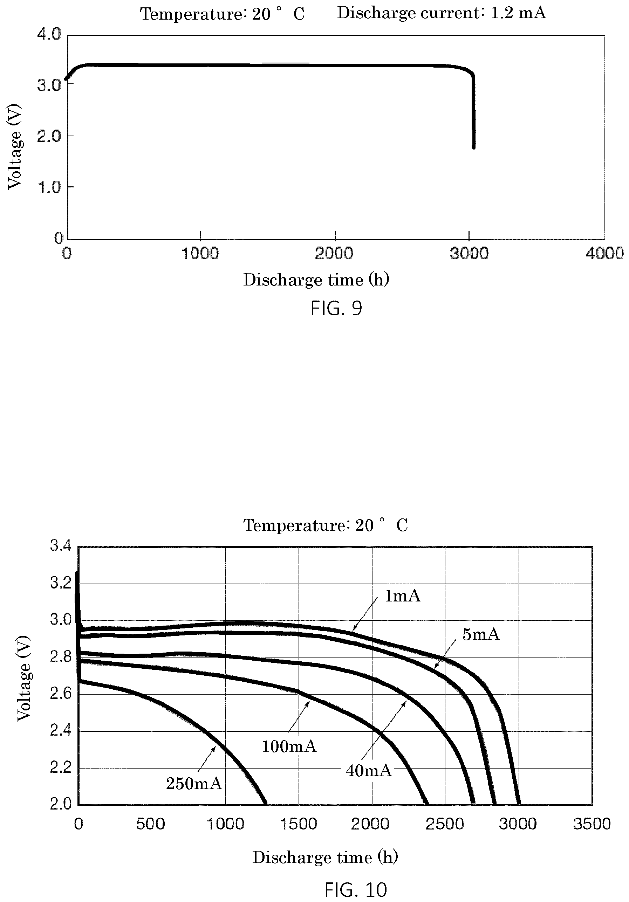

By way of example, the cathode active material may be manganese dioxide or a manganese oxide that is doped with lithium in advance, such as LiₓMnO₂ (x ≤ 1/15), which makes it easier to detect in advance an end of discharge of the lithium primary battery pack 100 than with a cathode active material of thionyl chloride. FIG. 9 shows an example of a discharge characteristic of a lithium primary battery with a cathode active material made of thionyl chloride, with the size ER18/50 (diameter: 18 mm; height: 52.6 mm). FIG. 10 shows an example of a discharge characteristic of a lithium primary battery with a cathode active material made of manganese dioxide, with the size 17450 (diameter: 17 mm; height: 45 mm). As shown in FIG. 9, the thionyl chloride/lithium battery has a discharge characteristic that discharge progresses at a constant voltage and, toward the end of discharge, voltage rapidly drops. In contrast, as shown in FIG. 10, the manganese-dioxide lithium battery exhibits slow decreases in voltage toward the end of discharge. The manganese-dioxide lithium battery allows a long period of time from detection of a decrease in voltage until an end of discharge. For example, for the discharge curve with the discharge current of 1 mA shown in FIG. 10, the time required for a discharge capacity of 1 mAh is 1 hour; thus, "discharge capacity (mAh)" for the horizontal axis in the graph can be replaced with "discharge time (hour)", making it possible to directly read changes in the voltage of the battery over discharge time. As will be clear from the graph, for the discharge current of 1 mA, discharge can be performed for about 260 hours from the point of time at which the voltage decreases to 2.7 V to the point at which the voltage further decreases to 2.0 V This will facilitate detecting an end of discharge in advance.

The lithium primary battery pack 100 of the present embodiment can be suitably used as a battery for a gas meter. A lithium primary battery pack 100 for a gas meter and a gas meter using the lithium primary battery pack 100 as its power source are encompassed in the embodiments of the present invention. Some gas meters require a battery with a voltage of 3.6 V In such cases, the lithium primary battery pack 100 of the present embodiment, which is capable of output at approximately 3.6 V and requires less limitations of the cathode active material and allows easy prediction of the time of an end of discharge in advance, may be used as the power source of the gas meter. This provides a lithium primary battery pack having properties required of a gas-meter battery.

For example, a thionyl chloride/lithium primary battery has difficulty providing pulse discharge or discharge at current values of several mA or higher. To address this, a thionyl chloride/lithium primary battery may be combined with a backup battery, such as a capacitor, to provide a gas-meter battery capable of providing high currents. However, as more and more functions are incorporated in gas meters, continuous discharge at high current or a prolonged discharge time for a peak period in pulse discharge are more likely to be required. The inventors discovered that a combination of a thionyl chloride/lithium primary battery and a backup source have difficulty dealing with such use conditions. In view of this, a lithium primary battery pack of the present embodiment, which does not limit the cathode active material to thionyl chloride, will deal with such use conditions at high current.

Further, in a thionyl chloride/lithium primary battery, even when a decrease in voltage is detected, there is only a short period of time left until the battery ceases to discharge. Thus, for example, even when a decrease in the voltage of the lithium primary battery of a gas meter is detected and the management company or the like is notified, it may be difficult to replace the battery while the battery is still operating. Even if a worker of the management company receives the notification and tries to fix the problem, battery replacement may not be completed in time under certain circumstances, which will interrupt the measurement of gas flow rate, or the gas interruption valve may operate before the end of discharge of the battery and the user will then be unable to use gas.

In contrast, a lithium primary battery pack used in the present embodiment has a primary battery body constituted by a lithium battery a having a characteristic that voltage slowly decreases toward the end of discharge (for example, manganese-dioxide lithium battery). Thus, there is a long period of time left after reception by the management company of information about a voltage decrease until the end of discharge of the battery, providing a sufficient time margin for battery replacement. Thus, the lithium primary battery pack can suitably be used as the power source of a gas meter having the function of sending information about a decrease in the voltage of the battery to the outside.

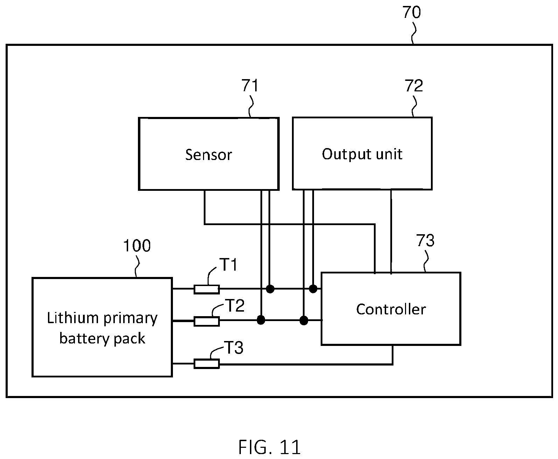

FIG. 11 is a functional block diagram of an exemplary configuration of a gas meter. In the implementation shown in FIG. 11, the gas meter 70 includes a lithium primary battery pack 100, a sensor 71, an output unit 72 and a controller 73. The lithium primary battery pack 100 is constituted by the lithium primary battery pack 100 of the above-discussed embodiment. The lithium primary battery pack 100 is detachable from the gas meter 70. The cathode and anode terminals T1 and T2 of the lithium primary battery pack 100 are coupled to the sensor 71, output unit 72 and controller 73. Thus, the lithium primary battery pack 100 supplies electricity to the sensor 71, output unit 72 and controller 73. The signal terminal T3 is coupled to the controller 73. The controller 73 is capable of causing the output unit 72 to send information based on a signal from the signal terminal T3 to the outside.

The sensor 71 detects the flow rate of gas. The sensor 71 is supplied with electric power from the lithium primary battery pack for operation. Although the sensor 71 is not limited to any particular configuration, it may be a diaphragm meter or ultrasonic meter, for example. A diaphragm meter detects the flow rate of gas by detecting movements of the diaphragm caused by the flow of gas. An ultrasonic meter detects the flow rate of gas by detecting ultrasonic waves that have passed the flow of gas.

The output unit 72 sends, to the outside of the gas meter 70, the result of detection by the sensor 71 and the result of detection by the detector 23 of the lithium primary battery pack 100 (i.e., information based on the signal from the signal terminal T3). The output unit 72 may include, for example, at least one of a speaker that sends information to the outside by means of sounds, a lamp that sends information to the outside by means of light, a display that sends information to the outside by means of images, a display machine (i.e., mechanical display device) that sends information to the outside by moving a pointer that points to a scale mark or a strip with information printed thereon, and a communication module capable of communicating with an external device. The communication module is, for example, a communication device that enables communication with an external device (e.g., server) over a network. The output of information of the output unit 72 is not limited to any particular format.

The controller 73 controls the gas meter 70 including the sensor 71 and output unit 72. The controller 73 is capable of processing information that is based on the result of detection by the sensor 71 and the signal from the signal terminal T3 and causing the output unit 72 to output the result. Further, if the lithium primary battery pack 100 includes a switch 21, the controller 73 may control turning on/off of the switch 21. For example, the controller 73 may be configured to switch the switch 21 between on and off based on a user operation of an input device such as a button or switch on the gas meter 70. The controller 73 may be constituted by a computer including a processor and memory, or an electronic circuit. At least two of the controller 73, sensor 71 and output unit 72 may be integrally constructed.

The gas meter 70 is not limited to the configuration shown in FIG. 11. For example, the gas meter 70 may include a gas flow control device that controls the flow of gas or an interrupting device that interrupts the flow of gas based on the result of detection by the sensor 71. In such implementations, the controller 73 may be configured to control a valve that controls or interrupts the flow of gas based on the result of detection by the sensor 71. In some implementations, electric power for driving the valve may be supplied by the lithium primary battery pack 100.

Although the embodiments of the present invention have been described, the present invention is not limited to the above-described embodiments. The use of the lithium primary battery pack of the present invention is not limited to a gas meter battery.

### EXPLANATION OF CHARACTERS

1: primary battery body
21: switch
22: voltage converter
23: detector
24: package
T1: cathode terminal
T2: anode terminal
T3: signal terminal
100: lithium primary battery pack

## Claims

1. A lithium primary battery pack comprising:
a lithium primary battery body including a cathode, an anode, and a separator located between the cathode and the anode;
a voltage converter adapted to boost a voltage from the lithium primary battery body to 3.4-3.8 V and output the boosted voltage;
a detector adapted to detect a decrease in the voltage of the lithium primary battery body;
a cathode terminal and an anode terminal coupled to the voltage converter; and
a signal terminal coupled to the detector.

2. The lithium primary battery pack according to claim 1, further comprising: a switch adapted to switch between connection and disconnection between the lithium primary battery body and the voltage converter.

3. The lithium primary battery pack according to claim 1 or 2,
wherein the cathode includes, as cathode active material, manganese dioxide or a manganese oxide doped with lithium in advance.

4. The lithium primary battery pack according to any one of claims 1 to 3, further comprising: a package integrally containing the lithium primary battery body, the voltage converter and the detector,
wherein the cathode terminal, the anode terminal and the signal terminal are drawn out of the package.

5. The lithium primary battery pack according to any one of claims 1 to 4, wherein the voltage of the lithium primary battery body is lower than 3.4 V.

6. A gas meter including the lithium primary battery pack according to any one of claims 1 to 5.

7. The gas meter according to claim 6, including an output unit adapted to send, to an outside, information about a decrease in the voltage of the lithium primary battery body.
